# EUROPÄISCHE PATENTSCHRIFT

(11) **EP 2 399 307 B1**
(45) Veröffentlichungstag und Bekanntmachung des Hinweises auf die Patenterteilung: **20.03.2013**
(21) Anmeldenummer: 09771508.0
(22) Anmeldetag: 04.12.2009
(51) Int. Cl.: H01M 2/02, H01M 2/08, H01M 10/48, H01M 10/04, H01M 2/12, H01M 4/02, H01M 10/02

(54) **GALVANISCHE ZELLE MIT MEHRTEILIGEM GEHÄUSE MIT EINER DEHNBAREN VERBINDUNGSNAHT**
GALVANIC CELL HAVING A MULTIPART HOUSING HAVING AN ELASTIC ASSEMBLY SEAM
CELLULE GALVANIQUE À LOGEMENT EN PLUSIEURS PARTIES COMPORTANT UNE SOUDURE DE RACCORD EXTENSIBLE

(30) Priorität: 23.02.2009 DE 102009010146
(43) Veröffentlichungstag der Anmeldung: 28.12.2011
(73) Patentinhaber: Li-tec Battery GmbH, 01917 Kamenz (DE)
(72) Erfinder: SCHÄFER, Tim, 99768 Harztor (DE); GUTSCH, Andreas, 59348 Luedinghausen (DE)
(74) Vertreter: Wallinger, Michael
(86) Internationale Anmeldenummer: PCT/EP2009/008685
(87) Internationale Veröffentlichungsnummer: WO 2010/094311

(56) Entgegenhaltungen:
- DE-U1-202008 004 352
- JP-A- 4 026 052
- JP-A- 2003 086 240
- JP-A- 2003 272 588
- US-A1- 2005 181 272
- US-A1- 2008 124 625

## Beschreibung

Die vorliegende Erfindung betrifft eine galvanische Zelle für eine Batterie. Die Erfindung wird im Zusammenhang mit wiederaufladbaren Lithium-lonen-Batterien zur Versorgung von KFZ-Antrieben beschrieben. Es wird darauf hingewiesen, dass die Erfindung auch unabhängig von der Bauart der galvanischen Zelle, deren Chemie und auch unabhängig von der Art des versorgten Antriebs Verwendung finden kann.

Aus dem Stand der Technik sind wiederaufladbare Batterien mit mehreren galvanischen Zellen zur Versorgung von Kraftfahrzeug-Antrieben bekannt. Bekannte galvanische Zellen sind beispielsweise in den Dokumenten JP 04026052 und JP 2003 272588 offenbart. Während des Betriebs der wiederaufladbaren Batterie in einem Kraftfahrzeug altert die galvanische Zelle. Mechanische Beanspruchungen können schädigend auf einige Baugruppen der galvanischen Zelle wirken und deren Nutzungsdauer verringern.

Der Erfindung liegt die Aufgabe zugrunde, die Nutzungsdauer einer galvanischen Zelle zu erhöhen und einem im Zellinneren vorhandenen Überdruck zügig abzubauen.

Diese Aufgabe wird erfindungsgemäß durch die Gegenstände der unabhängigen Ansprüche gelöst. Zu bevorzugende Weiterbildungen der Erfindung sind Gegenstand der Unteransprüche.

Eine erfindungsgemäße galvanische Zelle von im wesentlichen prismatischer Gestalt weist einen Elektrodenstapel mit wenigstens einer Anode, eine Kathode und einen Separator auf. Der Separator ist vorgesehen, einen Elektrolyt wenigstens teilweise aufzunehmen. Weiter weist die galvanische Zelle wenigstens zwei Gehäuseteile auf, welche den Elektrodenstapel wenigstens teilweise umschließen. Wenigstens eine Verbindungsnaht verbindet die wenigstens zwei Gehäuseteile wenigstens streckenweise. Die galvanische Zelle ist dadurch gekennzeichnet, dass die wenigstens eine Verbindungsnaht dehnbar ausgestaltet ist.

Im Sinne der Erfindung ist unter einer galvanischen Zelle eine Vorrichtung zu verstehen, welche auch zur Speicherung chemischer Energie und zur Abgabe elektrischer Energie dient. Dazu verfügt die erfindungsgemäße galvanische Zelle wenigstens über einen Elektrodenstapel, welcher von einem mehrteiligen Gehäuse umschlossen ist.

Auch kann die galvanische Zelle ausgestaltet sein, elektrische Energie beim Laden aufzunehmen. Man spricht dann auch von einer Sekundärzelle oder einem Akkumulator.

Mehrere galvanische Zellen können zu einer Batterie insbesondere elektrisch in Reihen- und/oder Parallelschaltung verschaltet sein. Dabei sind die mehreren galvanischen Zellen insbesondere einander berührend angeordnet.

Im Sinne der Erfindung ist unter einem Elektrodenstapel eine Einrichtung zu verstehen, welche als Baugruppe einer galvanischen Zelle auch der Speicherung chemischer Energie und zur Abgabe elektrischer Energie dient. Dazu weist der Elektrodenstapel wenigstens zwei Elektroden, Anode und Kathode, und einen Separator auf, welcher den Elektrolyt wenigstens teilweise aufnimmt. Vorzugsweise sind wenigstens eine Anode, ein Separator und eine Kathode übereinander gelegt bzw. gestapelt, wobei der Separator wenigstens teilweise zwischen Anode und Kathode angeordnet ist. Diese Abfolge kann sich innerhalb des Elektrodenstapels beliebig wiederholen. Vorzugsweise sind die Schichten zu einem Elektrodenwickel aufgewickelt. Nachfolgend wird der Begriff "Elektrodenstapel" auch für Elektrodenwickel verwendet.

Vor der Abgabe elektrischer Energie wird gespeicherte chemische Energie in elektrische Energie gewandelt. Diese Wandlung ist verlustbehaftet.

Während des Ladens wird die dem Elektrodenstapel bzw. der galvanischen Zelle zugeführte elektrische Energie in chemische Energie gewandelt und abgespeichert.

Bei der Entnahme oder Zufuhr elektrischer Energie fließen in dem Elektrodenstapel elektrische Ströme, welche eine Heizleistung bewirken. Diese Heizleistung kann zur Erhöhung der Temperatur des Elektrodenstapels bzw. der galvanischen Zelle führen. Als Folge der Temperaturerhöhung kann sich der Elektrodenstapel ausdehnen.

Vorzugsweise weist der Elektrodenstapel mehrere Elektrodenpaare und Separatoren auf. Besonders bevorzugt sind einige Elektroden untereinander insbesondere elektrisch verbunden. Vorzugsweise weisen die äußeren Elektroden des Elektrodenstapels unterschiedliche Polarität auf. Vorzugsweise ist der Elektrodenstapel quaderförmig. Vorzugsweise sind die Normalvektoren mit den größten Beträgen einer plattenförmigen Elektrode und des zugehörigen Elektrodenstapels parallel angeordnet.

Im Sinne der Erfindung ist unter einer Anode eine Einrichtung zu verstehen, welche beim Laden positiv geladene Ionen beispielsweise auf Zwischengitterplätzen einlagert. Dabei kann sich die Anode ausdehnen. Auch infolge Erwärmung kann sich die Anode ausdehnen. Vorzugsweise weist die Anode eine aktive A-nodenmasse und einen Stromableiter auf. Vorzugsweise ist der Stromableiter der Anode dünnwandig ausgebildet, besonders bevorzugt als Metallfolie. Vorzugsweise ist der Stromableiter im Wesentlichen rechteckig ausgebildet.

Im Sinne der Erfindung ist unter einer Kathode eine Einrichtung zu verstehen, welche beim Entladen bzw. während der Abgabe elektrischer Energie auch Elektronen und positiv geladene Ionen aufnimmt. Vorzugsweise weist die Kathode eine aktive Kathodenmasse und einen Stromableiter auf. Vorzugsweise ist der Stromableiter der Kathode dünnwandig ausgebildet, besonders bevorzugt als Metallfolie. Vorzugsweise entspricht die Gestalt der Kathode im Wesentlichen der Gestalt einer Anode des Elektrodenstapels.

Im Sinne der Erfindung ist unter einem Separator eine Einrichtung zu verstehen, welche eine Anode und eine Kathode bzw. deren aktive Elektrodenmassen trennt und beabstandet. Der Separator nimmt auch den Elektrolyt wenigstens teilweise auf. Vorzugsweise ist ein Separator dünnwandig ausgebildet, besonders bevorzugt als Polymerfolie. Vorzugsweise entspricht die Gestalt des Separators im Wesentlichen der Gestalt einer Anode des Elektrodenstapels. Vorzugsweise weist der Separator ein keramisches Material auf.

Im Sinne der Erfindung ist unter einem Gehäuseteil eine Einrichtung zu verstehen, welche den Elektrodenstapel wenigstens teilweise umgibt. Bevorzugt weist ein insbesondere dünnwandiges Gehäuseteil eine dreidimensionale Gestalt und/oder wenigstens eine Begrenzungskante auf. Die Gestalt eines Gehäuseteils ist auch an die Gestalt des Elektrodenstapels angepasst. Bevorzugt weist ein Gehäuseteil wenigstens bereichsweise einen elektrisch leitenden Werkstoff auf. Vorzugsweise weist ein Gehäuseteil Kupfer, Aluminium, Edelstahl und/oder ein aushärtbares Polymer auf. Bevorzugt ist ein Gehäuseteil bereichsweise mit einer insbesondere elektrisch isolierenden Beschichtung bedeckt. Vorzugsweise sind mehrere Gehäuseteile, insbesondere zwei Gehäuseteile so ausgestaltet, dass sie gemeinsam den Elektrodenstapel überwiegend umgeben. Bevorzugt verlaufen wenigstens jeweils eine Begrenzungskante zweier Gehäuseteile wenigstens streckenweise parallel. Bevorzugt sind streckenweise parallel verlaufende Begrenzungskanten verschiedener Gehäuseteile von einem schmalen Spalt getrennt. Vorzugsweise sind wenigstens zwei Gehäuseteile voneinander elektrisch isoliert.

Im Sinne der Erfindung ist unter einer dehnbaren Verbindungsnaht eine Einrichtung zu verstehen, welche mehrere Gehäuseteile insbesondere stoffschlüssig verbindet. Vorzugsweise ist die dehnbare Verbindungsnaht elastisch ausgebildet. Mehrere Gehäuseteile können durch mehrere getrennte Verbindungsnähte verbunden sein. Vorzugsweise ist die wenigstens eine Verbindungsnaht auch durch Kleben, Löten oder Schweißen erzeugt. Vorzugsweise wird ein Fügeverfahren angewendet, welches eine dehnbare Verbindungsnaht erzeugt. Der Elastizitätsmodul des Materials der wenigstens einen Verbindungsnaht ist vorzugsweise geringer, als die Elastizitätsmodule der Materialien der Gehäuseteile. Insbesondere bewirken elastische Rückstellkräfte innerhalb der wenigstens einen dehnbaren Verbindungsnaht auch ein enges Umschließen des Elektrodenstapels durch die wenigstens zwei Gehäuseteile.

Die elektrische Leitfähigkeit des Materials wenigstens einer Verbindungsnaht ist bevorzugt deutlich geringer, als die elektrischen Leitfähigkeiten der Materialien der Gehäuseteile. Vorzugsweise weist wenigstens eine Verbindungsnaht wenigstens ein aushärtbares Polymer auf. Besonders bevorzugt weist wenigstens eine Verbindungsnaht ein Elastomer oder Kautschuk auf.

Sofern sich der Elektrodenstapel einer galvanische Zelle infolge Temperaturerhöhung, der Einlagerung von Ionen in eine Elektrode und/oder der Abscheidung eines Stoffs an einer Elektrode ausdehnt, kann das Gehäuse der galvanischen Zelle, insbesondere wenigstens ein Bereich einer Verbindungsnaht dieser Ausdehnung wenigstens zeitweise nachgeben. So werden Kräfte, welche auf die Schichten des Elektrodenstapels wirken, verringert. Ein mögliche Schädigung einer Schicht des Elektrodenstapels infolge einer Druckspannung wird so verringert. So wird die galvanische Wirksamkeit des Elektrodenstapels weitgehend erhalten und die zugrunde liegende Aufgabe gelöst.

Erfindungsgemäß die wenigstens eine Verbindungsnaht ausgestaltet, auf vorbestimmte Weise zu versagen. Bei entsprechender Ausbildung der wenigstens einen Verbindungsnaht kann auch auf die Höhe eines zum Versagen der Verbindungsnaht erforderlichen Überdrucks innerhalb der galvanischen Zelle Einfluss genommen werden. Weiter ist die Verbindungsnaht bevorzugt mit einer Dünnstelle oder Sollbruchstelle ausgebildet, so dass Einfluss auf den Ort des Versagens der wenigstens einen Verbindungsnaht Einfluss genommen werden kann. Weiter kann bei entsprechender Ausbildung der wenigstens einen Verbindungsnaht über das Ausmaß einer Dünnstelle oder Sollbruchstelle Einfluss auf die Größe der Öffnungsfläche nach dem Versagen der wenigstens einen Verbindungsnaht genommen werden. Nachfolgend werden zu bevorzugende Weiterbildungen der Erfindung beschrieben.

Vorteilhaft sind wenigstens eine Anode und Kathode des Elektrodenstapels elektrisch- und wärmeleitend wenigstens bereichsweise mit verschiedenen Gehäuseteilen insbesondere kraftschlüssig und/oder formschlüssig verbunden. So können sowohl die Anode als auch die Kathode mit den jeweiligen Gehäuseteilen elektrische Energie und/oder Wärmeenergie austauschen.

Eine Elektrode einer galvanischen Zelle kann mit einer sogenannten Poldurchführung kontaktiert werden. Diese Poldurchführung durchdringt dabei üblicherweise das Gehäuse einer galvanischen Zelle. Der Ort des Durchdringens ist gegenüber der Umgebung abzudichten. Mit einer elektrisch leitenden Berührung zwischen einer Elektrode und einem Gehäuseteil kann aber auf eine Poldurchführung verzichtet werden. So wird eine mögliche Leckstelle des Gehäuses vorteilhaft vermieden.

Mit einer wärmeleitenden Berührung zwischen einer Elektrode und einem Gehäuseteil kann von außen mit einer Elektrode bzw. mit dem Elektrodenstapel Wärmeenergie ausgetauscht werden. So kann Einfluss auf die Temperatur der Elektrode bzw. des Elektrodenstapels einer galvanischen Zelle genommen werden. Insbesondere wenn der Bereich der wärmeleitenden Berührung zwischen einer Elektrode und einem Gehäuseteil großflächig ausgebildet ist, können auch größere Wärmeleistungen mit der Elektrode bzw. mit dem Elektrodenstapel ausgetauscht werden.

Vorteilhaft sind wenigstens eine Anode und eine Kathode des Elektrodenstapels als Gehäuseteile ausgebildet. Vorzugsweise sind die beiden äußeren Elektroden des Elektrodenstapels als Gehäuseteile ausgebildet. Vorzugsweise weisen diese beiden äußeren Elektroden unterschiedliche Polarität auf. Mit dieser Ausbildung zweier Elektroden kann vorteilhaft auf zusätzliche Gehäuseteile verzichtet werden. Wenigstens eine dehnbare Verbindungsnaht verbindet bei dieser Ausführungsform eine Anode mit einer Kathode zu einem geschlossenen Gehäuse um die übrigen Schichten des Elektrodenstapels. Dabei isoliert die dehnbare Verbindungsnaht die verbundenen Gehäuseteile bzw. Elektroden voneinander. Vorteilhaft ist ein erster Kontaktbereich auf einer Begrenzungsfläche eines Gehäuseteils angeordnet. Ein erster Kontaktbereich ist elektrisch leitend und/oder wärmeleitend. Betreffend den Austausch von elektrischer Energie bzw. Wärmeenergie mit dem Elektrodenstapel wirkt ein Gehäuse auch als weiterer Widerstand. Mit der genannten Ausbildung zweier Elektroden als Gehäuseteile können der elektrische Widerstand und der Wärmewiderstand gegenüber einer herkömmlichen Ausführung einer galvanischen Zelle verringert werden. Mit dieser Ausbildung der galvanische Zelle kann diese vorteilhaft über mehrere und/oder größere erste Kontaktbereiche elektrisch leitend und/oder wärmeleitend kontaktiert werden. Auf Durchführungen bzw. Durchbrüche eines Gehäuseteils kann vorteilhaft verzichtet werden.

Vorteilhaft sind die wenigstens zwei Gehäuseteile nach dem Fügen bzw. Umschließen des Elektrodenstapels gegeneinander verspannt. Die wenigstens zwei Gehäuseteile umschließen den Elektrodenstapel insbesondere formschlüssig. Dabei liegen die wenigstens zwei Gehäuseteile eng an dem Elektrodenstapel an. Vorzugsweise üben die wenigstens zwei Gehäuseteile auf den Elektrodenstapel einen vorbestimmten Druck aus. Dieser Druck bewirkt auch, dass die verschiedenen Schichten des Elektrodenstapels fest aufeinander und in guten, elektrischen und thermischen Kontakt mit den Gehäuseteilen stehen. Der Druck der Gehäuseteile bewirkt auch, dass die verschiedenen Schichten des Elektrodenstapels auch aufeinander Reibkräfte ausüben. Dieser Reibkräfte verringern unerwünschte Relativbewegungen einzelner Schichten, insbesondere infolge von Schwingungen. So können Schwingungen, welche während des Betriebs der galvanischen Zelle auftreten, den Zusammenhalt des Elektrodenstapels weniger beeinträchtigen. Das Verspannen der wenigstens zwei Gehäuseteile bewirkt, dass sich ein Spalt zwischen diesen wenigstens zwei Gehäuseteilen nach Entfernen oder Versagen der dehnbaren Verbindungsnaht verbreitet. Insbesondere bewirken elastische Rückstellkräfte innerhalb der wenigstens einen dehnbaren Verbindungsnaht auch ein enges Umschließen des Elektrodenstapels durch die wenigstens zwei Gehäuseteile.

Vorteilhaft ist wenigstens eines der Gehäuseteile so gestaltet, dass es zum Anliegen an dem Elektrodenstapel bzw. zum Schließen des Gehäuses verformt werden muss. Die Verformung bewirkt auch mechanische Spannungen und elastische Rückstellkräfte innerhalb dieses Gehäuseteils. Diese Spannungen und Rückstellkräfte führen auch dazu, dass das Gehäuseteile im Verbund mit dem übrigen Gehäuse eine Kraft auf den Elektrodenstapel ausüben kann. Diese Kraft wirkt vorzugsweise senkrecht auf wenigstens eine der Begrenzungsflächen des Elektrodenstapels und presst dabei die verschiedenen Schichten des Elektrodenstapels aufeinander. Dabei stützt sich der Elektrodenstapel insbesondere am übrigen Gehäuse ab. Reibkräfte zwischen den einzelnen Schichten verringern bevorzugt ein Verrutschen einzelner Schichten, insbesondere infolge von Vibrationen. Dieses Gehäuseteil ist vorzugsweise auch mit Sicken oder Rippen verstärkt, welche die elastischen Rückstellkräfte erhöhen.

Vorteilhaft ist einer galvanischen Zelle wenigstens eine Messeinrichtung, insbesondere ein Thermoelement zugeordnet. Die wenigstens eine Messeinrichtung ermittelt insbesondere die Temperatur der galvanischen Zelle an einer vorbestimmten Stelle und ist vorgesehen, einen zugehörigen Messwert zur Verfügung zu stellen. Vorzugsweise ist die wenigstens eine Messeinrichtung innerhalb der wenigstens zwei Gehäuseteile angeordnet. Vorzugsweise ermittelt die wenigstens eine Messeinrichtung einen Parameter des Elektrodenstapels, welcher Aufschluss über einen unerwünschten Betriebszustand, insbesondere Überhitzung geben kann. Druck und Temperatur sind solche Parameter.

Vorteilhaft ist wenigstens eine Zuleitung zu dieser Messeinrichtung innerhalb eines Gehäuseteils mit wenigstens einem zweiten Kontaktbereich verbunden. Vorzugsweise ist ein zweiter Kontaktbereich Teil der Wandung eines Gehäuseteils. Mehrere zweite Kontaktbereiche sind vorzugsweise voneinander und gegenüber den übrigen Bereichen des wenigstens einen Gehäuseteils isoliert, sind selbst aber elektrisch leitend. So kann der ermittelte Messwert mit Kontaktieren der zweiten Kontaktbereiche des wenigstens einen Gehäuseteils abgegriffen werden. Auf das Durchführen insbesondere von Anschlusskabeln kann vorteilhaft verzichtet werden.

Vorteilhaft wird eine erfindungsgemäße galvanische Zelle so hergestellt, dass deren wenigstens zwei Gehäuseteile nach dem Fügen gegeneinander verspannt sind. Dazu werden die wenigstens zwei Gehäuseteile nach deren Anordnung um den Elektrodenstapel zusammengepresst. Dazu wird vorzugsweise eine Fertigungseinrichtung verwendet, welche einen Zugang zu den zu verbindenden Begrenzungskanten der wenigstens zwei Gehäuseteile gestattet. Vorzugsweise wird die wenigstens eine dehnbare Verbindungsnaht durch Kleben, Löten oder Schweißen erzeugt. Es sind aber auch andere Fügeverfahren geeignet, die wenigstens zwei Gehäuseteile elastisch zu verbinden.

Vorteilhaft wird der von den wenigstens zwei Gehäuseteilen umschlossene Raum vor dem Erzeugen der wenigstens einen Verbindungsnaht evakuiert. Vorzugsweise erfolgt die Herstellung einer erfindungsgemäßen galvanischen Zelle wenigstens zeitweise innerhalb eines evakuierten Raums. Dabei fällt unter den Begriff "evakuiert" auch ein gegenüber der Normalatmosphäre bedeutsam verringerter Luftdruck. Vorzugsweise wird die vorgenannte Fertigungseinrichtung vor Erzeugen der wenigstens einen Verbindungsnaht in einen evakuierten Bereich überführt. Erst nach Fertigstellung der Verbindungsnaht wird die geschlossene galvanische Zelle dem evakuierten Bereich wieder entnommen.

Vorteilhaft wird zum Umschließen des Elektrodenstapels wenigstens ein Gehäuseteil verwendet, welches in einen gespannten Zustand überführbar ist. Erst im gespannten Zustand entspricht die Gestalt dieses Gehäuseteils der Gestalt des Elektrodenstapels. Vorzugsweise liegt das Gehäuseteil im gespannten Zustand wenigstens teilweise am Elektrodenstapel an. Vorzugsweise wird zur Herstellung einer erfindungsgemäßen galvanischen Zelle ein Fertigungshilfsmittel verwendet, welches die Überführung des wenigstens einen Gehäuseteils in einen gespannten Zustand bewirken kann. Vorzugsweise erfolgen das Zusammenpressen der wenigstens zwei Gehäuseteile sowie das Überführen des wenigstens einen Gehäuseteils in einen gespannten Zustand mit demselben Fertigungshilfsmittel. Dabei ist es unbedeutend, ob die wenigstens zwei Gehäuseteile erst um den Elektrodenstapel zusammengepresst werden oder erst das wenigstens eine Gehäuseteil in seinen gespannten Zustand überführt wird.

Vorteilhaft wird eine erfindungsgemäße galvanische Zelle so betrieben, dass insbesondere bei einem vorbestimmten Überdruck innerhalb der galvanischen Zelle ein Bereich der wenigstens einen Verbindungsnaht versagt. Dazu weist die wenigstens eine Verbindungsnaht vorzugsweise wenigstens eine Dünnstelle auf. Eine Dünnstelle ist insbesondere in einem Bereich der wenigstens einen Verbindungsnaht angeordnet, der ein Austreten einer größeren Menge Elektrolyt verhindert. Insbesondere ist eine Dünnstelle in einem Bereich der galvanischen Zelle angeordnet, der während des Betriebs in einem oberen Bereich einer zugehörigen Batterie angeordnet ist. Dabei ist die Länge der Dünnstelle bevorzugt so bemessen, dass der Überdruck nicht schlagartig abgebaut wird. Allerdings kann es je nach den Umständen des Betriebs einer zugehörigen Batterie auf einen möglichst zügigen Abbau eines möglichen Überdrucks ankommen. In diesem Fall ist die wenigstens eine Dünnstelle eher länger bemessen und möglicherweise auch entlang mehrerer Begrenzungskanten der wenigstens zwei Gehäuseteile ausgebildet. Vorzugsweise reißt oder bricht eine dehnbare Verbindungsnaht bei Überlastung wenigstens teilweise.

Vorteilhaft wird eine erfindungsgemäße galvanische Zelle so betrieben, dass wenigstens einem Gehäuseteil, insbesondere bei Überschreiten einer vorgegebenen maximalen Betriebstemperatur der galvanischen Zelle, Wärmeenergie entzogen wird. Dazu steht die erfindungsgemäße galvanische Zelle vorzugsweise in wärmeleitender Berührung mit einer Wärmeabfuhreinrichtung. Diese Wärmeabfuhreinrichtung kann Teil einer übergeordneten Batterie sein. Vorzugsweise wird zum Schalten einer schaltbaren Wärmeabfuhreinrichtung der von einer Messeinrichtung der galvanischen Zelle zur Verfügung gestellte Messwert, insbesondere die Temperatur der galvanischen Zelle verwendet.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: eine Ausführung einer erfindungsgemäßen galvanische Zelle im Schnitt,
- Fig. 2: eine Weiterbildung einer erfindungsgemäßen galvanische Zelle im Schnitt,
- Fig. 3: eine zweite Weiterbildung einer erfindungsgemäßen galvanischen Zelle im Schnitt,
- Fig. 4: eine Weiterbildung eines Gehäuseteils für eine erfindungsgemäße galvanische Zelle im Schnitt,
- Fig. 5: einen Ausschnitt einer Weiterbildung einer erfindungsgemäßen galvanischen Zelle, deren Verbindungsnaht eine Dünnstelle bzw. Sollbruchstelle aufweist,
- Fig. 6: eine perspektivische Ansicht einer Weiterbildung einer erfindungsgemäßen galvanischen Zelle mit einer Messeinrichtung.

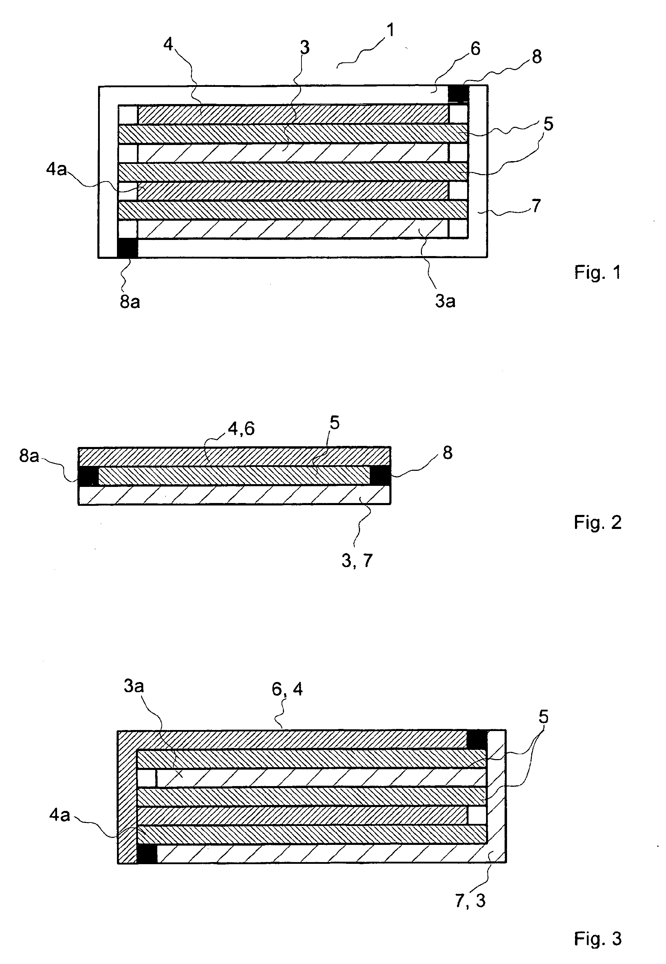

Fig.1 zeigt eine erfindungsgemäße galvanische Zelle 1, deren Elektrodenstapel 2 von zwei Gehäuseteilen 6, 7 umschlossen ist. Die beiden Gehäuseteile 6, 7 sind durch elastische Verbindungsnähte 8, 8a miteinander verbunden. Je nach Zuschnitt der Gehäuseteile 6, 7 können diese auch durch eine einzelne durchgehende Verbindungsnaht verbunden sein. Der Elektrodenstapel 2 ist aus mehreren Anoden 3, 3a mehreren Kathoden 4, 4a und mehreren Separatoren 5 gestapelt. Dabei sind die Elektroden 3, 3a, 4, 4a und die Separatoren 5 als rechteckige Folien ausgebildet, wobei die Separatorfolien 5 etwas größer als die E-lektrodenfolien bemessen sind. Der Elektrodenstapel 2 wird von einer Anode 3a und auf der anderen Seite von einer Kathode 4 begrenzt. Obwohl in der Figur nicht dargestellt, sind die Gehäuseteile 6, 7 so um den Elektrodenstapel 2 geschlossen, dass diese begrenzende Anode 3a und diese begrenzende Kathode 4 verschiedene Gehäuseteile 6, 7 elektrisch leitend und wärmeleitend berühren. Die dehnbaren Verbindungsnähte 8, 8a sind so ausgebildet, dass sie die beiden Gehäuseteile 6,7 in Folge von elastischen Rückstellkräften fest um den Elektrodenstapel 2 zusammenziehen. Die beiden Gehäuseteile 6,7 sind derart gegeneinander verspannt, dass sie mit Versagen einer Verbindungsnaht 8, 8a oder bei Fehlen einer Verbindungsnaht 8, 8a sich aus ihren vorbestimmten Positionen in Bezug auf den Elektrodenstapel 2 entfernen würden. Die Gehäuseteile 6, 7 sind deckungsgleich ausgebildet und ergänzen sich zu einer im Wesentlichen quaderförmigen Gestalt. Dabei sind die Gehäuseteile 6, 7 so bemessen, dass der von ihnen eingeschlossene Raum kleiner als der Rauminhalt des Elektrodenstapels 2 ist. Selbst unter Berücksichtigung der Abmessungen von ungedehnten Verbindungsnähten 8, 8a ist der von den Gehäuseteilen 6, 7 eingeschlossene

Raum kleiner als der Rauminhalt des Elektrodenstapels 2. So üben die Gehäuseteile 6, 7 nach dem Schließen des Gehäuses Kräfte auf den Elektrodenstapel 2 aus, welche dessen einzelne Schichten auch aufeinanderpressen.

Figur 2 zeigt eine weitere Ausführungsform einer erfindungsgemäßen galvanischen Zelle im Schnitt. Hier sind eine Anode 3 und eine Kathode 4 so ausgebildet, dass sie als Gehäuseteile 6, 7 ausgebildet sind und auch deren Aufgaben erfüllen. Vorteilhaft kann bei dieser Ausbildung auf zusätzliche Baugruppen für die Gehäuseteile verzichtet werden. Die von den Elektroden 3, 4 gebildeten Gehäuseteile 6, 7 sind durch eine Separatorschicht 5 getrennt und mit dehnbaren und elastischen Verbindungsnähten 8, 8a verbunden. Die elastischen Rückstellkräfte innerhalb der dehnbaren Verbindungsnähte 8, 8a bewirken, dass die Elektroden 3, 4 den Separator 5 mit einem gewissen Druck umschließen. So ist ein guter elektrisch leitender und wärmeleitender Kontakt zwischen den einzelnen Schichten gegeben. Durchaus könnten die Elektroden 3, 4 mehrere Separatoren 5 und weitere Elektroden umschließen.

Figur 3 zeigt eine zweite Weiterbildung einer erfindungsgemäßen galvanischen Zelle 1. Auch hier bilden die Elektroden 3, 4 gleichzeitig zwei Gehäuseteile 6, 7. Dabei sind die Anode 3 und die Kathode 4 mehrschichtig ausgebildet. Insbesondere sind die weiteren Elektrodenschichten 3a, 4a über Lötverbindungen mit den gehäusebildenden Elektrode 3, 4 elektrisch und wärmeleitend verbunden. Die einzelnen Schichten der Anode 3, 3a bzw. Kathode 4, 4a sind durch Separatoren 5 getrennt und beabstandet. Die Anode 3 bzw. die Kathode 4 sind so bemessen, dass sie gemeinsam einen zusammenpressenden Druck auf den Elektrodenstapel 2 ausüben. Die dehnbaren Verbindungsnähte 8, 8a erhalten diesen Druck infolge elastischer Rückstellkräfte. Die dehnbaren Verbindungsnähte 8, 8a isolieren die beiden Gehäuseteile 6, 7 bzw. Elektroden 3, 4 elektrisch voneinander.

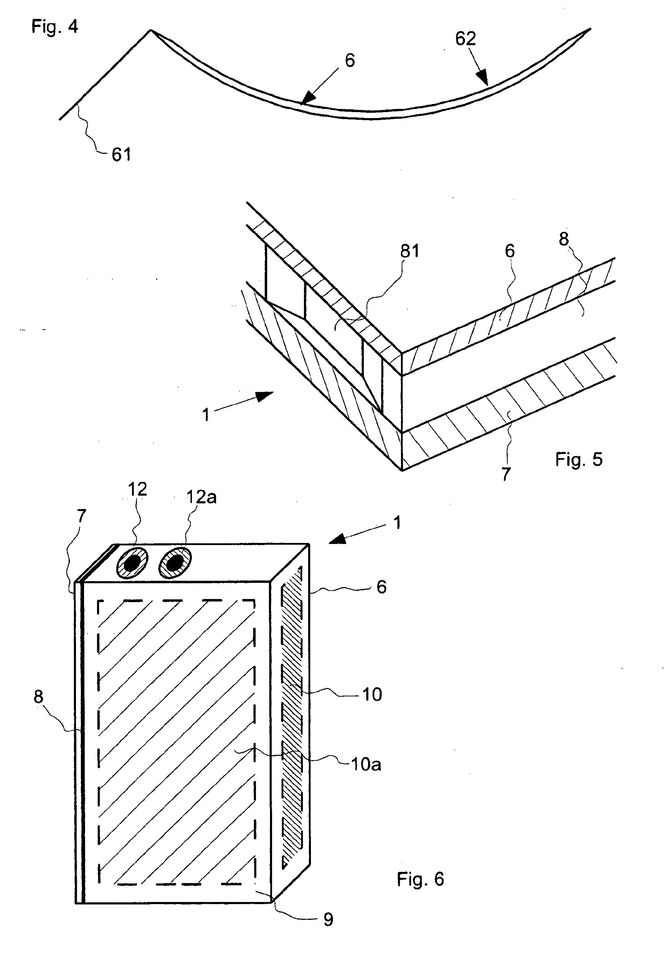

Figur 4 zeigt im Schnitt ein Gehäuseteil 6 in einem entspannten Zustand. Ein Schenkel 62 des Gehäuseteils 6 ist gekrümmt und mit einer Verstärkungsrippe versehen. Der Biegeradius ist zur besseren Darstellung übertrieben gezeichnet. Mit Strecken werden in dem Schenkel 62 Zug- und Druckspannungen erzeugt, welche den Schenkel 62 in seine ursprüngliche Gestalt zurückdrängen. Dieses Bestreben zur Krümmung des Schenkels 62 erzeugt mit Anliegen an den nicht dargestellten Elektrodenstapel eine Kraft, welche die Schichten des Elektrodenstapels aufeinander presst.

Figur 5 zeigt einen Ausschnitt einer erfindungsgemäßen galvanischen Zelle 1, wobei deren Verbindungsnaht 8 eine Dünnstelle bzw. Sollbruchstelle 81 aufweist. Die Dünnstelle 81 ist so bemessen, dass eine große Öffnung entsteht, durch welche ein Überdruck im Zellinneren zügig abgebaut werden kann. Die Dünnstelle 81 ist an einem oberen Bereich der galvanischen Zelle 1 so angeordnet, dass überwiegend Gase entweichen können.

Figur 6 zeigt eine erfindungsgemäße galvanische Zelle 1 mit einer Messeinrichtung. Die Messeinrichtung, hier ein Thermoelement, ist innerhalb des Gehäuses der galvanischen Zelle 1 angeordnet und in der Figur nicht dargestellt. Gehäuseteil 6 ist mit Gehäuseteil 7 mittels einer dehnbaren Verbindungsnaht 8 stoffschlüssig verbunden. Die Verbindungsnaht 8 ist als Klebverbindung ausgebildet. Das Gehäuseteil 6 weist mehrere Kontaktbereiche 10, 10a, 12, 12a auf. Ein erster Kontaktbereich 10 dient der Übertragung elektrischer Energie. Ein erster Kontaktbereich 10a dient der Übertragung von Wärmeenergie. Die zweiten Kontaktbereiche 12 und 12a dienen der Kontaktierung des nicht dargestellten Thermoelements. Die dargestellte Ausführungsform einer erfindungsgemäßen galvanischen Zelle 1 ermöglicht deren dauerhaften Betrieb unter Vermeidung auftretender Undichtigkeiten von Durchführungen.

## Patentansprüche

1. Galvanische Zelle (1) von im wesentlichen prismatischer Gestalt mit:
einem Elektrodenstapel (2), welcher wenigstens eine Anode (3, 3a), eine Kathode (4, 4a) und einen Separator (5) aufweist, wobei der Separator vorgesehen ist, einen Elektrolyt wenigstens teilweise aufzunehmen,
wenigstens zwei Gehäuseteilen (6, 7), welche vorgesehen sind, den Elektrodenstapel (2) wenigstens teilweise zu umschließen,
wenigstens einer dehnbar ausgestalteten Verbindungsnaht (8, 8a), welche vorgesehen ist, die wenigstens zwei Gehäuseteile (6, 7) wenigstens streckenweise zu verbinden,
**dadurch gekennzeichnet,**
**dass** die wenigstens eine Verbindungsnaht (8, 8a) ausgestaltet ist, auf vorbestimmte Weise zu versagen.

2. Galvanische Zelle (1) nach Anspruch 1, **dadurch gekennzeichnet, dass** wenigstens eine Anode (3) wenigstens bereichsweise eines der wenigstens zwei Gehäuseteile (6, 7) elektrisch leitend und wärmeleitend berührt, und dass wenigstens eine Kathode (4) wenigstens bereichsweise das andere der wenigstens zwei Gehäuseteile (6, 7) elektrisch leitend und wärmeleitend berührt.

3. Galvanische Zelle (1) nach Anspruch 1, **dadurch gekennzeichnet, dass** wenigstens eine Anode (3) als eines der wenigstens zwei Gehäuseteile (6, 7) ausgebildet ist und dass wenigstens eine Kathode (4) als das andere der wenigstens zwei Gehäuseteile (6, 7) ausgebildet ist.

4. Galvanische Zelle (1) nach mindestens einem der vorherigen Ansprüche, **dadurch gekennzeichnet, dass** wenigstens eines der wenigstens zwei Gehäuseteile (6, 7) wenigstens eine Begrenzungsfläche (9) und wenigstens einen ersten Kontaktbereich (10, 10a) aufweist, wobei der wenigstens eine erste Kontaktbereich (10, 10a) insbesondere auf der wenigstens einen Begrenzungsfläche (9) angeordnet ist.

5. Galvanische Zelle (1) nach mindestens einem der vorherigen Ansprüche, **dadurch gekennzeichnet, dass** die wenigstens zwei Gehäuseteile (6, 7) zum Fügen vorgesehen sind und dass die wenigstens zwei Gehäuseteile (6, 7) nach dem Fügen gegeneinander verspannt sind.

6. Galvanische Zelle (1) nach mindestens einem der vorherigen Ansprüche, **dadurch gekennzeichnet, dass** wenigstens eines der wenigstens zwei Gehäuseteile (6, 7) vorgesehen ist, von einem entspannten Zustand in einen gespannten Zustand überführt zu werden.

7. Galvanische Zelle (1) nach mindestens einem der vorhergehenden Ansprüche, **dadurch gekennzeichnet, dass** der galvanischen Zelle (1) weiter wenigstens eine Messeinrichtung (11), insbesondere eine Temperaturmesseinrichtung (11 a) zugeordnet ist.

8. Galvanische Zelle (1) nach Anspruch 7, **dadurch gekennzeichnet, dass** die wenigstens eine Messeinrichtung (11) mit wenigstens einem zweiten Kontaktbereich (12, 12a) insbesondere elektrisch leitend verbunden ist.

9. Verfahren zur Herstellung einer galvanischen Zelle (1) nach mindestens einem der vorhergehenden Ansprüche mit den Schritten:
a) Erzeugen des Elektrodenstapels (2),
b) Anordnen der wenigstens zwei Gehäuseteile (6, 7) um den Elektrodenstapel (2),
c) Zusammenpressen der wenigstens zwei Gehäuseteile (6, 7),
d) Erzeugen der wenigstens einen Verbindungsnaht (8, 8a).

10. Verfahren gemäß Anspruch 9 zur Herstellung einer galvanischen Zelle (1) nach mindestens einem der Ansprüche 1 - 9, **dadurch gekennzeichnet, dass** vor Schritt d) ein Unterdruck innerhalb des von den wenigstens zwei Gehäuseteile (6, 7) umschlossenen Raums erzeugt wird.

11. Verfahren gemäß Anspruch 9 oder 10 zur Herstellung einer galvanischen Zelle (1) nach Anspruch 7, **dadurch gekennzeichnet, dass** vor Schritt d) wenigstens eines der wenigstens zwei Gehäuseteile (6, 7) von einem entspannten Zustand in einen gespannten Zustand überführt wird.

12. Verfahren zum Betrieb einer galvanischen Zelle (1) nach mindestens einem der Ansprüche 1 - 8, dass die wenigstens eine Verbindungsnaht (8, 8a) bei vorbestimmten Bedingungen in vorbestimmter Weise versagt und insbesondere dem Inhalt der galvanischen Zelle (1) teilweise den Austritt gestattet.

13. Verfahren zum Betrieb einer galvanischen Zelle (1) nach mindestens einem der Ansprüche 1 - 8, dass wenigstens einem der wenigstens zwei Gehäuseteile (6, 7) bei vorbestimmten Bedingungen Wärmeenergie entzogen wird.

## Claims

1. A galvanic cell (1) of an essentially prismatic configuration with: an electrode stack (2), which has: at least one anode (3, 3a), one cathode (4, 4a) and one separator (5), wherein the separator is provided to accommodate an electrolyte at least partly, at least two parts of the housing (6, 7), which are provided to enclose the electrode stack (2) at least partly, at least one flexibly configured connecting seam (8, 8a), which is provided to connect the at least two parts of the housing (6, 7) in at least some sections, **characterised in that** the at least one connecting seam (8, 8a) is configured so as to fail in a predetermined manner.

2. The galvanic cell (1) in accordance with Claim 1, **characterised in that**, at least one anode (3) in at least some regions contacts one of the at least two parts of the housing (6, 7) in an electrically conducting and thermally conducting manner, and **in that** at least one cathode (4) contacts the other of the at least two parts of the housing (6, 7) in an electrically conducting and thermally conducting manner.

3. The galvanic cell (1) in accordance with Claim 1, **characterised in that**, at least one anode (3) is designed as one of the at least two parts of the housing (6, 7), and **in that** at least one cathode (4) is designed as the other of the at least two parts of the housing (6, 7).

4. The galvanic cell (1) in accordance with at least one of the preceding claims, **characterised in that**, at least one of the at least two parts of the housing (6, 7) has at least one boundary surface (9) and at least one first contact region (10, 10a), wherein the at least one first contact region (10, 10a) is in particular arranged on the at least one boundary surface (9).

5. The galvanic cell (1) in accordance with at least one of the preceding claims, **characterised in that**, provision is made for the at least two parts of the housing (6, 7) to be joined, and **in that** after joining the at least two parts of the housing (6, 7) are stressed relative to one another.

6. The galvanic cell (1) in accordance with at least one of the preceding claims, **characterised in that**, provision is made for at least one of the at least two parts of the housing (6, 7) to be translated from an unstressed state into a stressed state.

7. The galvanic cell (1) in accordance with at least one of the preceding claims, **characterised in that**, at least one measurement device (11), in particular a temperature measurement device (11a), is furthermore assigned to the galvanic cell (1).

8. The galvanic cell (1) in accordance with Claim 7,**characterised in that**,the at least one measurement device (11) is connected, in particular in an electrically conducting manner, with at least one second contact region (12, 12a).

9. A method for the manufacture of a galvanic cell (1) in accordance with one of the preceding claims, with the steps:
a) Creation of the electrode stack (2),
b) Arrangement of the at least two parts of the housing (6, 7) about the electrode stack (2),
c) Pressing together of the at least two parts of the housing (6, 7),
d) Creation of the at least one connecting seam (8, 8a).

10. The method in accordance with Claim 9 for the manufacture of a galvanic cell (1) in accordance with at least one of the Claims 1 - 9, **characterised in that**, before step d) a reduced pressure is created within the space enclosed by the at least two parts of the housing (6, 7).

11. The method in accordance with Claim 9 or 10 for the manufacture of a galvanic cell (1) in accordance with Claim 7, **characterised in that**, before step d) at least one of the at least two parts of the housing (6, 7) is translated from an unstressed state into a stressed state.

12. A method for the operation of a galvanic cell (1) in accordance with one of the Claims 1 - 8, such that the at least one connecting seam (8, 8a) fails under predetermined conditions in a predetermined manner, and in particular enables the content of the galvanic cell (1) partially to exit.

13. The method for the operation of a galvanic cell (1) in accordance with one of the Claims 1 - 8, such that under predetermined conditions thermal energy is extracted from one of the at least two parts of the housing (6, 7).

## Revendications

1. Cellule galvanique (1) de constitution sensiblement prismatique avec :
une pile d'électrodes (2) qui présente au moins une anode (3, 3a), une cathode (4, 4a) et un séparateur (5), le séparateur étant prévu pour loger au moins partiellement un électrolyte,
au moins deux parties de boîtier (6, 7) qui sont prévues pour entourer au moins partiellement la pile d'électrodes (2),
au moins une soudure de raccord (8, 8a) réalisée de façon extensible qui est prévue pour raccorder au moins par tronçons les parties de boîtier (6, 7) au moins au nombre de deux,
**caractérisée en ce que**
la soudure de raccord (8, 8a) au moins au nombre de un est réalisée pour céder de façon prédéfinie.

2. Cellule galvanique (1) selon la revendication 1, **caractérisée en ce qu'**au moins une anode (3) touche au moins par zones un des parties de boîtier (6, 7) au moins au nombre de deux de façon électriquement et thermiquement conductrice, et **en ce qu'**au moins une cathode (4) touche au moins par zones l'autre des parties de boîtier (6, 7) au moins au nombre de deux de façon électriquement et thermiquement conductrice.

3. Cellule galvanique (1) selon la revendication 1, **caractérisée en ce qu'**au moins une anode (3) est réalisée en tant qu'une des parties de boîtier (6, 7) au moins au nombre de deux, et **en ce qu'**une cathode (4) est réalisée en tant que l'autre des parties de boîtier (6, 7) au moins au nombre de deux.

4. Cellule galvanique (1) selon au moins une des revendications précédentes, **caractérisée en ce qu'**au moins une des parties de boîtier (6, 7) au moins au nombre de deux présente au moins une surface de limitation (9) et au moins une première zone de contact (10, 10a), la première zone de contact (10, 10a) au moins au nombre de un étant disposée en particulier sur la surface de limitation (9) au moins au nombre de un.

5. Cellule galvanique (1) selon au moins une des revendications précédentes, **caractérisée en ce que** les parties de boîtier (6, 7) au moins au nombre de deux sont prévues pour l'assemblage, et **en ce que** les parties de boîtier (6, 7) au moins au nombre de deux sont serrées l'une contre l'autre après l'assemblage.

6. Cellule galvanique (1) selon au moins une des revendications précédentes, **caractérisée en ce qu'**au moins une des parties de boîtier (6, 7) au moins au nombre de deux est prévue pour être commutée d'un état non serré vers un état serré.

7. Cellule galvanique (1) selon au moins une des revendications précédentes, **caractérisée en ce qu'**au moins un dispositif de mesure (11), en particulier un dispositif de mesure de température (11a), est en outre affecté à la cellule galvanique (1).

8. Cellule galvanique (1) selon la revendication 7, **caractérisée en ce que** le dispositif de mesure (11) au moins au nombre de un est raccordé, en particulier de façon électriquement conductrice, à au moins une deuxième zone de contact (12, 12a).

9. Procédé de fabrication d'une cellule galvanique (1) selon au moins une des revendications précédentes, comprenant les étapes suivantes :
a) production de la pile d'électrodes (2),
b) agencement des parties de boîtier (6, 7) au moins au nombre de deux autour de la pile d'électrodes (2),
c) compression exercée sur les parties de boîtier (6, 7) au moins au nombre de deux,
d) production de la soudure de raccord (8, 8a) au moins au nombre de un.

10. Procédé de fabrication selon la revendication 9 pour la fabrication d'une cellule galvanique (1) selon au moins une des revendications 1 - 8, **caractérisé en ce que**, avant l'étape d), une dépression est produite à l'intérieur de l'espace entouré par les parties de boîtier (6, 7) au moins au nombre de deux.

11. Procédé selon la revendication 9 ou 10 pour la fabrication d'une cellule galvanique (1) selon la revendication 7, **caractérisé en ce que**, avant l'étape d), au moins une des parties de boîtier (6, 7) au moins au nombre de deux est commutée d'un état non serré vers un état serré.

12. Procédé de fonctionnement d'une cellule galvanique (1) selon au moins une des revendications 1 - 8, **caractérisé en ce que** la soudure de raccord (8, 8a) au moins au nombre de un cède d'une façon prédéfinie en présence de conditions prédéfinies et permet en particulier une sortie partielle du contenu de la cellule galvanique (1).

13. Procédé de fonctionnement d'une cellule galvanique (1) selon au moins une des revendications 1 - 8, **caractérisé en ce que** de l'énergie thermique est prélevée sur au moins une des parties de boîtier (6, 7) au moins au nombre de deux en présence de conditions prédéfinies.
